# EUROPEAN PATENT APPLICATION

(11) **EP 4 811 554 A1**
(43) Date of publication of application: **23.09.2026**
(21) Application number: 25164841.6
(22) Date of filing: 19.03.2025
(51) Int. Cl.: H01R 4/70, B60R 16/00, H01M 50/50, H01R 11/28

(54) **CONNECTOR DEVICE ENABLING TOUCH PROTECTION FOR MULTIPLE MOUNTING CYCLES**

(71) Applicant: Intercable Automotive Solutions GmbH, 39031 Bruneck (IT)
(72) Inventor: CASANOVA, Fabian, Bruneck (IT)
(74) Representative: Hernandez, Yorck

(57) **Abstract**

The disclosure relates to a connector device (1), in particular for battery modules of a vehicle, with two connecting parts (10, 20) that are configured to be electrically connected when the connecting parts (10, 20) are mated, wherein the first of the two connecting parts (10) comprises a first conducting element (11), a first housing element (12), and a fixation element (13) that is arranged movably relative to the first housing element (12) along an axial direction, from a parking position where a touch protection is provided, to a mounting position where the first connecting part (10) can be fixed at the second of the two connecting parts (20) by means of the fixation element (13) when the connecting parts (10, 20) are mated, where the first housing element (12) comprises a holding feature (12a) configured to hold the fixation element (13) in the parking position; and wherein the second of the two connecting parts (20) comprises a second conducting element (21) and a second housing element (22); wherein the first housing element (12) comprises a first other holding feature (12d) and/or the second housing element (22) comprise a second other holding feature (22d), which first and/or second other holding features (12d, 22d) are configured for holding, when the connecting parts (10, 20) are mated, first and second housing elements (12, 22) attached to each other in a mating position by hindering a relative movement of first and second housing element (12, 22) with respect to each other along the axial direction with up to a first axial limit force, where the first axial limit force is greater than a second axial limit force, which second axial limit force has to be exceeded in order to move the fixation element (13) along the axial direction into the parking position where it is held by the one holding feature (12a) of the first housing element (12) in order to provide an improved connector device (1), in particular for battery modules of a vehicle, which efficiently maintains safety and reliability over an extended time span, in particular over multiple mounting cycles.

## Description

### Field of the invention

The disclosure relates to a connector device, in particular for battery elements of a vehicle, with two connecting parts that are configured to be electrically connected when the connecting parts are mated, wherein the first of the two connecting parts comprises a first conducting element, a first housing element, and a fixation element that is arranged movably relative to the first housing element along an axial direction, from a parking position where a touch protection is provided, to a mounting position where the first connecting part can be fixed at the second of the two connecting parts by means of the fixation element when the connecting parts are mated, with the first housing element comprises a holding feature configured to hold the fixation element in the parking position when the connecting parts are not mated; and wherein the second of the two connecting parts comprises a second conducting element and a second housing element.

### Background

Modern electric batteries, in particular vehicle batteries, typically consist of multiple modules assembled into a battery pack. The electrical connection of these modules requires specialized connector devices capable of withstanding high voltages and currents while remaining compact and lightweight and providing safety, i.e. touch protection, when being mounted. Moreover, these connector devices must resist extreme environmental conditions such as vibrations, temperature fluctuations, and electromagnetic influences.

Known embodiments of such connector devices that are often also referred to as module connectors or modular connectors. They often include rigid busbars or flexible cables with specialized plug connections as exemplified in patent documents EP 3 419 119 A1, EP 4 207 496 A1, and US 2024 339 770 A1. However, these solutions frequently present disadvantages in terms of ease of assembly, reliability, or safety, in particular when it comes to multiple mounting cycles.

The present invention aims to address these challenges through a novel design for connector devices, thereby further improving the efficiency and safety of electric vehicle batteries.

This innovative approach builds upon the existing art while introducing unique features to overcome the limitations of current designs. By doing so, the invention seeks to advance the state of the art in electrical connectors for automotive applications, particularly in the rapidly evolving field of electric vehicle technology.

The technical task, therefore, is to provide an improved connector device, in particular for battery modules of a vehicle, which efficiently maintains safety and reliability over an extended time span, in particular over multiple mounting cycles.

### Overview

This task is solved by the objects of the independent claims. Advantageous embodiments will be apparent from the dependent claims, the description and the figures.

One aspect relates to a connector device, in particular for battery modules of a vehicle such as an electric vehicle, i.e. a vehicle with electrical drive motor. Consequently, the connector device may be designed for high voltages, i.e. voltages above 60V, preferably of at least 400V, more preferably of at least 800V. For these voltages, given requirements for touch protection are specified in the relevant regulatory documents. The connector device has two connecting parts that are configured to be electrically connected when the connecting parts are mated. In the mated or mating position, the conducting and housing elements of the two connecting parts, i.e. of first and second connecting part, are in a fixed relative position to one another and the electrical connection between the connecting parts is realized, preferably with respective contact surfaces of the two connecting parts touching each other.

The first of the two connecting parts comprises a first conducting element, which is configured for conducting current and may comprise or be attached to a busbar, a first housing element, which is made of or with non-conductive (i.e. isolating) material (such as plastic) and covers at least part of the first conducting element, and a fixation element, which is arranged movably relative to the first housing element and first conducting element along an axial direction. The first conducting element may comprise all conductive components of the first connecting part except the fixation element. The fixation element is configured to be moved along the axial direction from a parking position where a touch protection (for the first connecting part) is provided to a mounting position where the first connecting part can be fixed at the second of the two connecting parts by means of the fixation element when the connecting parts are mated. The parking position may also be referred to as pre-mounting position. In the parking position, the touch protection may be provided by the fixation element being electrically disconnected and/or spaced apart from the first conducting element, preferably while forming, in conjunction with the first housing part, one or more access openings to the first conducting element fulfilling given requirements for said touch protection. Such given requirements may relate, e.g., to a maximal diameter of the access opening. Note that a touch protection is not realized in the mounting position of the fixation element, as it cannot be ruled out, due to the possible mechanical, thus electrical contact of the fixation element with the first conducting element, that the fixation element is under voltage.

The first housing element comprises a (initial) holding feature that is configured to hold the fixation element in the parking position, in particular when the connecting parts are not mated (the fixation element may be held in the parking position also when the connecting parts are mated, as will be apparent from the explanations below). Thus, the holding feature is configured to hold by means of a mechanical connection where the first housing element and the fixation element mechanically interact. The mechanical connection is designed for repeated use, i.e. the fixation element may be repeatedly removed from and reattached to the holding feature. As also explained in more detail below, a snap-in or clamp connection, where the holding feature is or comprises a snap-in/clamp feature is suitable for this multiple-use purpose.

The second of the two connecting parts comprises a second conducting element, which is configured for conducting current and may comprise or be attached to a busbar, and a second housing element, which is made of or with non-conductive material and covers at least part of the second conducting element. The second conducting element may comprise all conductive components of the second connecting part. The second connecting part, in particular the second conducting element may comprise a counterpart for the fixation element, i.e. for engagement with the fixation element. For instance, if the fixation element is or comprises a screw (with a thread), the counterpart may be a thread provided in the second connecting part, in particular the second conducting element. The fixation element may be made from or with a metal.

The first housing element comprises a first other (additional) holding feature and/or the second housing element comprise a second other (additional) holding feature. The first and/or second other holding features are configured for holding, when the connecting parts are mated, first and second housing elements attached to one another in a mating position by hindering a relative movement of first and second housing element with respect to each other along the axial direction with up to a first axial limit force. Thus, when first and/or second other holding features are engaged, thus first and second housing element are attached to one another, an axial force (force along the axial direction) exceeding the first axial limit force is required to overcome the holding force provided by the engagement of first and second other holding feature and to move the first and second housing element away from each other in the axial direction, out of the mating position. Thus, the mating position may refer to a fixed relative position of the first and second housing element where the first and/or second other holding features provide a mechanical connection, where e.g. the first housing element and second housing element mechanically engage via the first and second other holding feature.

Therein, the first axial limit force is greater than a second axial limit force, which second axial limit force has to be exceeded in order to move the fixation element along the axial direction (back) into the parking position where it is held (again) by the one (initial) holding feature of the first housing element. Thus, an axial force exceeding the second axial force limit is required to overcome a resistance of the one holding feature in order to have the one holding feature engage with the fixation element such that it remains in the parking position (again).

The forces described here are measured in absence of any other type of engagement between the elements involved. In particular, they relate to a state where the fixation element is not engaged with the second connecting part (initial holding feature) or not present (additional holding feature). This is due to the fact that the fixation element, when not, partly or fully engaged with the second connecting part cause additional axial forces having an effect on the mobility of the fixation element with respect to the first housing element and/or the first housing element with respect to the second housing element. The proposed design is based on the insight that an insertion force for bringing the fixation element into a (safe) parking position, where the fixation element is held (securely), that is smaller than a disassembly force required for detaching (or unmounting/unmating) the housing elements of the two connecting parts can be used for automatically bringing the fixation element into a safe position.

Thus, the proposed connector device has the advantage that even if the fixation element is electrically live, i.e. mounted in a used system, touch protection can automatically be maintained throughout the complete unmounting, without any additional steps required from a user or any additional components like a cover cap. In particular no isolating caps or similar components are required. Both isolating caps and additional steps tend to get lost over time or repeated use. Thus safety is increased by the proposed design, in particular when the connector device is unmounted over multiple mounting cycles, i.e. a prolonged period of time. Saving components also contributes to reliability over an extended time span.

In one embodiment, it is provided that the holding feature of first housing element and/or the other holding features of first and/or second housing elements are or comprise snap-in features that implement a respective snap-in connection (also referred to as latching connection). The respective snap-in connection may be realized between first housing element and fixation element (through the one holding feature) and/or between the first housing/conducting element and the second housing/conducting element (through the other holding feature/s). This gives the advantage that the required axial limit forces may be adjusted by the geometrical layout of the respective holding features with a very good precision, thus enhancing safety. This is particularly true when the housing element(s) are made from or with plastic.

Consequently, the holding feature of first housing element and/or some of or all the other holding features, in particular the first other holding feature, may comprise one or more respective snap-in arms, preferably at least two or exactly two snap-in arms. The snap-in arms are configured to be bent with respect to the rest of the associated housing when engaging with the respective counterpart, in particular the fixation element (for the initial holding feature) or the other holding feature of the other housing element (for the additional holding feature), i.e. when it snaps in. Preferably, the snap-in arms are only part of the first housing element, which gives the advantage that the choice of materials for the different housing elements can be optimized more specifically, i.e. different materials may be chosen for the different housing elements without loss of functionality. The snap-in arms are specifically suitable for defining the above-mentioned required axial limit forces, since length and thickness of the snap-in arms, as well as the steepness of a respective nose (to interlock with a corresponding notch in the respective counterpart) can be adjusted precisely. So a high degree of safety can be achieved.

Preferably, the one or more snap-in arms of the holding feature and/or the other holding features are interior snap-in arms. With respect to the other holding feature, i.e. the snap-in arm(s) of one housing element engaging with the other housing/conducting element, the snap-in arm(s) may be interior only in the mated state, i.e. when the housing elements are in the mating position. This gives the advantage that the snap-in arms are mechanically protected by the rest of the housing element or the other housing element, respectively, which contributes to longevity, and thus increases safety.

In a further embodiment, it is provided that an axial extension (i.e. an extension or length measured along the main extension direction of the fixation element) of the fixation element, in particular an engagement means such as a thread of the fixation element, is great enough to engage the second connecting part, in particular the second conducting element, while both the fixation element is in the parking position and the first other holding feature and/or the second other holding feature have not engaged their respective counterparts (e.g. when the snap-in arms are not bent yet). In particular, the fixation element may be long enough to engage with at least 2, preferably at least 3 or at least 4 threads. This gives the advantage that the fixation element may be used as means to overcome both the first and the second axial force limit. For instance, in case the fixation element is or comprises a screw, the first connecting part can simply be screwed to the second connecting part, where the screw is simply screwed out of the parking position and further along the axial direction, until it reaches the mounting position. This also allows for an increased first (and second) axial limit force, which improves safety as unintended movement of the fixation means out of the parking position is hindered. An increased number of threads engaging prior to mating of the two connecting parts also increases the first (and second) axial limit forces that can be implemented without undue burden to the user, since a higher torque can be applied while screwing (note that a torque applied to the screw translates into an axial force mating/unmating the two connector parts.

In one embodiment, it is provided that the fixation element is configured to fix the two connecting parts at each other by engagement with the second conducting element. In particular, the fixation element is configured to extend at least partly into or through the first conducting element. The fixation element may be configured for pressing individual contact surfaces of the respective conducting element onto each other to realize and/or improve the electrical connection when the connecting parts are in the mated state. This gives the advantage of a safe and reproducible electrical connection between the two connecting parts.

In a further embodiment, it is provided that in the parking position of the fixation element, the fixation element is electrically disconnected, in particular spaced apart, from the first conducting element. This is an advantageously simple way of fostering touch protection.

In one embodiment, it is provided that touch protection is established for the first connecting part in one region of the first connecting part by the shape of the first housing element and/or in another region of the first connecting part by the shape of the first housing element in conjunction with an axial extension of the fixation element. For instance, the one region may comprise a hole in the first housing element with a diameter fulfilling given requirements for said touch protection. For instance, the diameter may be chosen such that the fixation element, e.g. a head of a screw, can be accessed through the hole only via a suitable tool. In the other region, the touch protection may be provided by an end section opposite to e.g. the head of the screw by forming, in conjunction with the first housing part, another access openings to the first conducting element fulfilling said given requirements for touch protection such as a maximal diameter. Said end section of the fixation element may be electrically connected to the rest of the fixation element, in particular be made of or with metal. This gives the advantage that touch protection is realized in a reliable way with a reduced number of parts, which makes the proposed solution particularly suitable for multiple mounting cycles.

A further aspect relates to a method for safely disconnecting one or more battery modules, in particular in a vehicle.

Therein, an initial unscrewing of a screw, which screw serves, in a mounting position of the screw, as a fixation element that fixes a first and a second connecting part of a connector device at one another, takes place until a first torque limit is reached, while a first housing element of the first connecting part and a second housing of the second connecting part remain held attached to one another in a mating position by corresponding holding features of the respective housings. During the initial unscrewing, the screw may be electrically live.

Subsequently to the initial unscrewing, a continued unscrewing of the screw takes place with overcoming the first torque limit until a second torque limit is reached, thereby automatically moving the screw in a parking position where it is held by the first housing element, which second torque limit is greater than the first torque limit, while the first housing element of the first connecting part and the second housing element of the second connecting part still remain held attached to one another in the mating position by said corresponding holding features of the respective housings. Also during the continued unscrewing, the screw may be electrically live.

Subsequently to the continued unscrewing, a further unscrewing of the screw takes place with overcoming, preferably while the screw remains in the parking position, the second torque limit and automatically moving first and second housing out of the mating position, thereby electrically disconnecting the first and the second connecting part, in particular a first conducting element of the first connecting part from a second conducting element of the second connecting part. As the screw is electrically disconnected from the first conducting element in the parking position, it can be part of a touch protection even if being made of a material that conducts electricity (metal, usually).

Advantages and advantageous embodiments of the latter aspects correspond to the advantages and advantageous embodiments described for the former aspect, and vice versa.

The features and combinations of features described, including those of the general introduction, as well as the features and combinations of features disclosed in the figure description or in the figures alone, may be used not only alone or in the combination described, but also with other features or without some of the features disclosed, without departing from the scope of the invention. Consequently, embodiments are also part of the invention which are not explicitly shown and described in the figures, but which can be produced by separately combining the individual features disclosed in the figures. Therefore, embodiments and combinations of features which do not comprise all features of an originally formulated independent claim are also to be considered disclosed. Furthermore, embodiments and combinations of features are to be regarded as disclosed which deviate from or go beyond the combinations of features described in the dependencies of the claims.

In the context of the present disclosure, "transverse/along" may be understood as "at least substantially perpendicular/parallel", i.e. " perpendicular/parallel" or "substantially perpendicular/parallel", i.e. perpendicular/parallel except for a predetermined deviation.

The predetermined deviation can, for example, be at most 15°, preferably at most 5°, particularly preferably at most 3°. Accordingly, "oppositely oriented" may be understood in the context of the present disclosure as "at least substantially oppositely oriented" i.e. "at least substantially anti-parallel oriented". The orientation of a plane may be determined by its normal vector. The limitation "substantially" may also refer to a percentage predetermined maximum permissible deviation, for example at most 15%, preferably at most 5%, particularly preferably at most 3%.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

### Detailed description

Example embodiments are described in more detail below with reference to schematic drawings. Therein
- Fig. 1: shows a view on an example embodiment of a first connecting part with a fixation element in a parking position;
- Fig. 2: shows a view on the example embodiment of Fig. 1 with the fixation element in a mounting position;
- Fig. 3: shows a view on an example embodiment of a connector device with first and second connecting part where the fixation element is in the parking position and the connecting parts are not mated;
- Fig. 4: shows a view on the example embodiment of Fig. 3 where the fixation element is in the mounting position and the connecting parts are mated;
- Figs. 5: show views on the example embodiment of Fig. 3 where the fixation element is in the parking position and the connecting parts are mated; and
- Figs. 6: show views on the example embodiment of Fig. 3 where the fixation element is back in the parking position and the connecting parts are unmated.

In the figures, the same or functionally identical features are provided with the same reference signs.

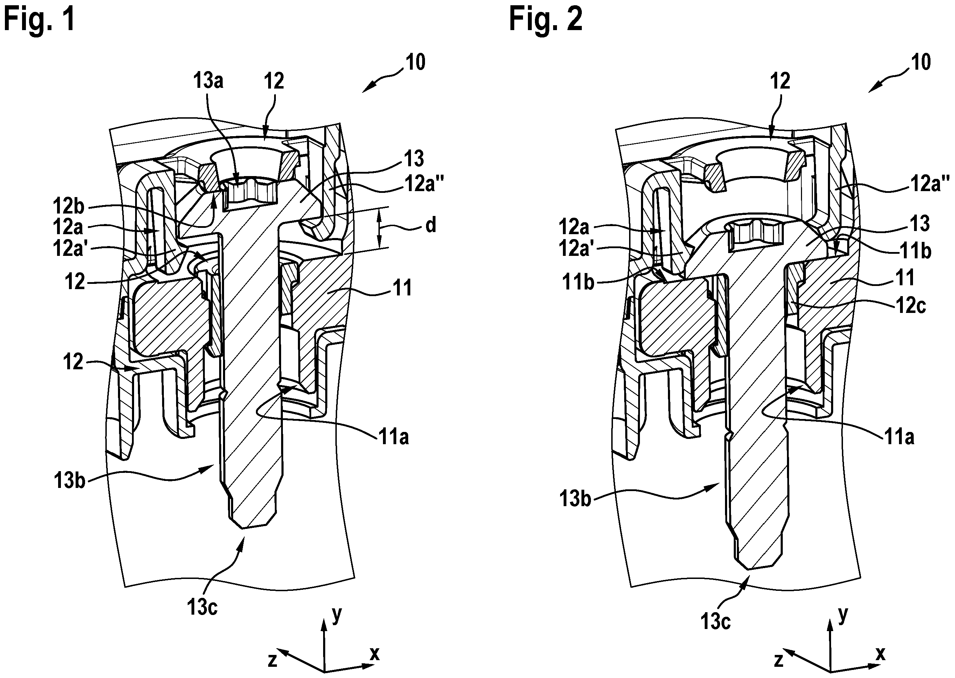

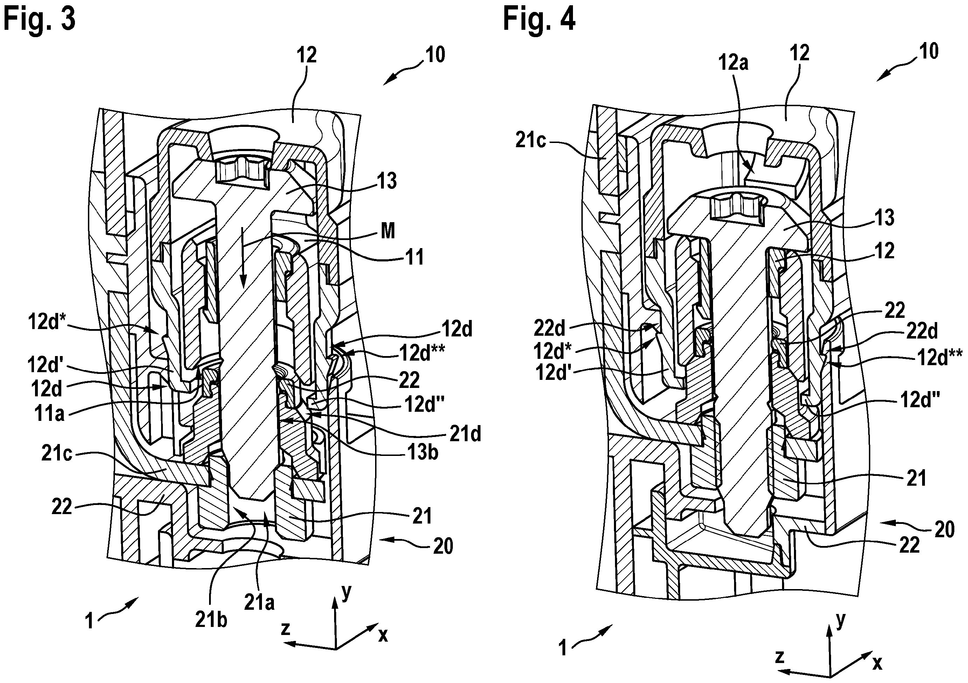

Figure 1 shows a perspective sectional view in the x-y plane on an example embodiment of a first connecting part 10 of a connector device 1 (Fig. 3) with a fixation element 13 in a parking position. The first connecting part 10 comprises a first conducting element 11, a first housing element 12, and a fixation element 13. In the present example, the fixation element 13 is a screw with a head 13a, a thread 13b, and a remote end 13c. However, the fixation element 13 may also be another type of fixation element, e.g. an element of a bayonet lock. The fixation element 13 is arranged movably relative to the first housing element 12 along an axial direction (y-direction here).

The fixation element 13 is shown in a parking position here where a touch protection is provided, with the fixation element 13 being axially spaced apart from the first conducting element 11 (which may already be under voltage) with an axial distance d (thus the fixation element 13 is electrically disconnected from the first conducting element 11). Due to this distance d and the isolation provided by the housing element 12, the fixation element 13 is not under voltage and thus can contribute to a touch protection of a contact surface 11a of the first conducting element 11 in spite of being made, in the present example, entirely of metal. Note that in existing solutions, touch protection is often achieved with using a plastic (isolating) cap on the remote end 13c of the fixation element 13.

The housing element 12 (which may comprise several different sub-elements) comprises a (initial) holding feature 12a configured to hold the fixation element 13 in the parking position. Note that in the shown example, the head 13a abuts to a fixed inner wall 12b which limits a movement of the fixation element 13 in the axial direction (the positive y-direction here). Thus, the fixation element 13 may be in the parking position held without play.

The holding feature 12a is a snap-in feature in the present example, and comprises at least one (here two) snap-in arms 12a', 12a" that are bent (outwardly, i.e. negative and positive x-direction here) by the fixation element 13 as corresponding counterpart when the fixation element 13 is moved out of or into the shown parking position along the axial direction. The snap-in arms 12a', 12a" are interior snap-in arms 12a', 12a" here, thus they are mechanically protected by the rest of the housing element 12 and cannot be accessed without tools and/or non-destructively.

Figure 2 shows the view on the example embodiment of Fig. 1 where the fixation element 13 is in a mounting position. This mounting corresponds to the fixation element 13, which extends through the first conducting element 11 here (and, in this example, also through a subelement 12c of the housing element 12 that provides guidance along the axial direction for the fixation element 13 while isolating it from the first conducting element 11), being moved along the axial direction (negative y-direction here) until the axial distance d is zero. Thus, the head 13a abuts an upper surface 11b (oriented in the positive y-direction here). Consequently, the fixation element 13 can be used to exert a force in the axial direction onto the contact surface 11a when fixed to a second connecting part 20 (Fig. 3) via its engagement e.g. by the thread 13b. So in the mounting position, the first connecting part 10 can be fixed at the second of the two connecting parts 20 by means of the fixation element 13 when the connecting parts 10, 20 are mated. Note that a force required to move the fixation element 13 out of the parking position, i.e. to overcome a holding force provided by the holding feature 12a may correspond, i.e. be similar or identical to, a (second, see below) axial limit force that has to be exceeded in order to move the fixation element 13 along the axial direction (back) into the parking position.

Figure 3 shows a perspective sectional view in the y-z plane on an example embodiment of a connector device 1 with first and second connecting part 10, 20 where the fixation element 13 is in the parking position and the connecting parts 10, 20 are not mated. The second connecting part 20 comprises a second conducting element 21 and a second housing element 22. The (initial) holding feature 12a is not shown die to the plane of the sectional view being different from that of Figs. 1 and 2.

The first housing element 12 comprises a first other/additional holding feature 12d, which also is a snap-in feature in the present example. The first other holding feature 12d comprises at least one (here two) snap-in arms 12d', 12d" that are bent (inwardly, i.e. negative and positive z-direction here) by the second housing element 22, i.e. a second other/additional holding feature 22d as corresponding counterpart when first and/or second connecting parts 10, 20 are moved along the axial direction towards each other into a mated state (which mated state is shown in Fig. 4). The snap-in arms 12d', 12d" are interior snap-in arms 22d', 22d" in that they are mechanically protected by the second housing element 22 and cannot be accessed without tools and/or non-destructively once the housing elements 22 are mated. The second other holding feature 22d may be or comprise at least one of an edge, a notch or a groove as counterpart for a nose 22d*, 22d** of the snap-in arms 12d', 12d", or vice versa. The snap-in arms may also be formed by or part of the second other holding feature.

The second conductive element 21 in the present example comprises a through-hole 21a with a thread 21b, which thread 21b is configured to engage with the thread 13b of the fixation element when the first connecting part 10 is fixed to the second connecting part 20. In addition, the second conductive element 21 also comprises a busbar 21c in this example. The second conductive element 21 comprises a contact surface 21d configured for an electrical connection with the contact surface 11a of the first conductive element 11 in a mated state of the connecting parts 10, 20.

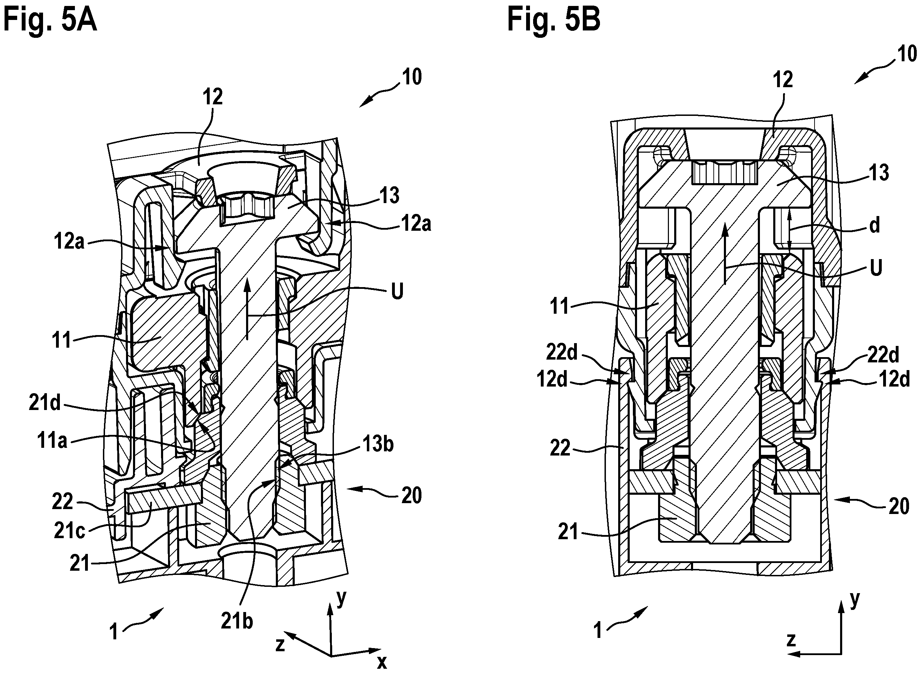

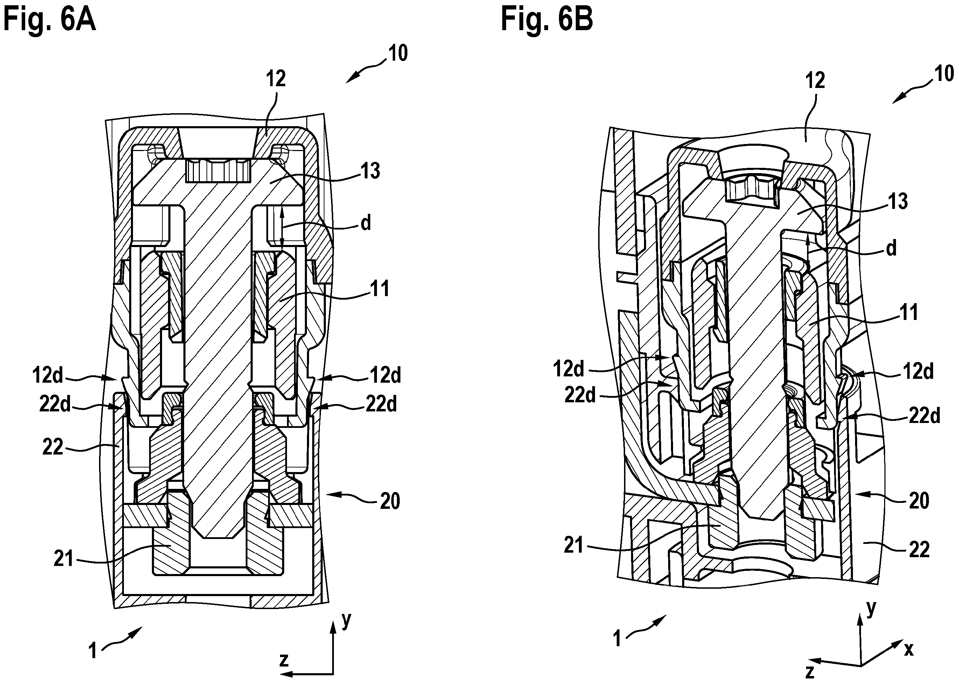

An axial extension (i.e. an extension along the axial direction) of the fixation element 13, here the thread 13b, may be large enough to engage the second connecting part 20, preferably the second conducting element 21 while both the fixation element 13 is in the parking position and the first other holding feature 12d and the second other holding feature 22d have not engaged each other here as respective counterparts. Then, simply by screwing the fixation element 13 into the second connecting part 20 corresponding to mounting arrow M, the two connecting parts 10, 20 can be mated and the two housing parts 12, 22 automatically attached or fixed to each other in the mating position of the other holding features 12d, 22d as shown in Fig. 4. Said axial extension could also be shorter for the mounting without significant disadvantage, but is particularly advantageous for unmounting (explained in more detail in Figs. 5, 6).

Figure 4 shows a view on the example embodiment of Fig. 3 where the fixation element 13 is in the mounting position and the connecting parts 10, 20 and/or the housing elements 12, 22 are mated, i.e. the first other holding feature 12d is engaged with its counterpart, the second other holding feature 22d. Thus, first and second other holding features 12d, 22d are holding the first and second housing elements 12, 22 attached to each other in a mating position by hindering a relative movement of first and second housing element 12, 22 with respect to each other along the axial direction. Thus, when the effect of the fixation element 13 is ignored, i.e. the effect of the first and second other holding features 12d, 22d is considered in isolation, first and second other holding features 12d, 22d hinder the disassembly of the two connecting parts 10, 20, in particular the two housing elements 12, 22, in the axial direction with up to a first axial limit force. Thus, this first axial limit force has to be overcome when the two housing elements 12, 22 are to be pulled apart.

Said first axial limit force is greater than a second axial limit force, which second axial limit force has to be exceeded in order to move the fixation element 13 along the axial direction into the parking position, where it is held by the one holding feature 12a of the first housing element 12, corresponding to unmounting arrow U in Figs. 5A and 5B.

Figures 5A and 5B show a perspective sectional view as well as a standard sectional view in the y-z plane on the example embodiment of Fig. 3 where the fixation element 13 is back in the parking position and the connecting parts 10, 20 are mated. The fixation element 13 jas been unscrewed corresponding to unmounting arrow U. Since the two housing elements 12, 22 are engaged/fixed to one another via their respective other holding features 12d, 22d, unscrewing the fixation element 13 moved the fixation element 13, but not the first housing element 12, away from the second housing element 22 along the axial direction. Thus, the fixation element 13 abuts the holding feature 12a at some point, which needs to be deformed in order to allow a further axial movement of the fixation element 13 away from second housing element 22. For this deformation, an axial force greater than the second axial force limit has to be applied. Since the second axial force limit is smaller than the first axial force limit that has to be overcome do disengage the two housing elements 12, 22 from each other, the fixation element 13 is automatically moved into the (safe) parking position (and secured there by the holding feature 12a) while the two housing elements 12, 22 are still mated. Thus the fixation element 13 cannot be touched when it is not yet in the (safe) parking position when the connecting parts are disassembled.

Since the fixation element 13, here its head 13a, abuts the first housing element 12, and the axial extension of the fixation element 13, in particular its thread 13a, is large enough to still engage the second connecting part 20, in particular the second conducting element 21, in the state shown in Figs. 5A, 5B, further unscrewing/unmounting of the fixation element 13 results in an applied axial force that exceeds also the first axial force limit. Thus not only the fixation element 13, but also the entire first connecting part 10, in particular its housing element 12, is moved corresponding to unmounting arrow U away from the second connecting part 20/housing element 22 by overcoming an axial holding force provided by the other holding features 12d, 22d. Consequently, the connecting parts are unmated while the fixation element is automatically brought and held in the (safe) parking position, as shown in Figs. 6A and 6B where the fixation element 13 just disengaged the connector part 20.

## Claims

1. Connector device (1), in particular for battery modules of a vehicle, with two connecting parts (10, 20) that are configured to be electrically connected when the connecting parts (10, 20) are mated, wherein
- the first of the two connecting parts (10) comprises
-- a first conducting element (11),
-- a first housing element (12), and
-- a fixation element (13) that is arranged movably relative to the first housing element (12) along an axial direction, from a parking position where a touch protection is provided, to a mounting position where the first connecting part (10) can be fixed at the second of the two connecting parts (20) by means of the fixation element (13) when the connecting parts (10, 20) are mated,
-- where the first housing element (12) comprises a holding feature (12a) configured to hold the fixation element (13) in the parking position;
- the second of the two connecting parts (20) comprises
-- a second conducting element (21) and
-- a second housing element (22);
**characterized in that**
- the first housing element (12) comprises a first other holding feature (12d) and/or the second housing element (22) comprise a second other holding feature (22d), which first and/or second other holding features (12d, 22d) are configured for holding, when the connecting parts (10, 20) are mated, first and second housing elements (12, 22) attached to each other in a mating position by hindering a relative movement of first and second housing element (12, 22) with respect to each other along the axial direction with up to a first axial limit force, where
- the first axial limit force is greater than a second axial limit force, which second axial limit force has to be exceeded in order to move the fixation element (13) along the axial direction into the parking position where it is held by the one holding feature (12a) of the first housing element (12).

2. Connector device (1) according to claim 1,
**characterized in that**
the holding feature (12a) of first housing element (12) and/or the other holding features (12d, 22d) of first and/or second housing elements (12, 22) are or comprise snap-in features.

3. Connector device (1) according to claim 2,
**characterized in that**
the holding feature (12a) of first housing element (12) and/or some of or all the other holding features (12d, 22d), in particular the first other holding feature (12d), comprise one or more respective snap-in arms (12a', 12a", 12d', 12d"), preferably at least 2 snap-in arms (12a', 12a", 12d', 12d"), that are configured to be bent when engaging with the respective counterpart, in particular the fixation element (13) or the other holding feature (12d, 22d) of the other housing element (12, 22).

4. Connector device (1) according to claim 3,
**characterized in that**
the one or more snap-in arms (12a', 12a", 12d', 12d") of the holding feature (12a) and/or the other holding features (12d, 22d) are interior snap-in arms.

5. Connector device (1) according to any one of the preceding claims,
**characterized in that**
an axial extension of the fixation element (13), in particular a thread (13b) of the fixation element (13), is great enough to engage the second connecting part (20), in particular the second conducting element (21), while both the fixation element (13) is in the parking position and the first other holding feature (12d) and/or the second other holding feature (22d) have not engaged their respective counterparts.

6. Connector device (1) according to any one of the preceding claims,
**characterized in that**
the fixation element (13) is or comprises a screw, in particular with a thread (13b) that is configured to engage the second connecting part (20).

7. Connector device (1) according to any one of the preceding claims,
**characterized in that**,
the fixation element (13) is configured to fix the two connecting parts (10, 20) at each other by engagement with the second conducting element (21).

8. Connector device (1) according to any one of the preceding claims,
**characterized in that**,
in the parking position of the fixation element (13), the fixation element (13) is electrically disconnected from the first conducting element (11).

9. Connector device (1) according to any one of the preceding claims,
**characterized in that**
touch protection is established for the first connecting part (10) in one region of the first connecting part (10) by the shape of the first housing element (12)

10. Connector device (1) according to any one of the preceding claims,
**characterized in that**
touch protection is established for the first connecting part (10) in another region of the first connecting part (10) by the shape of the first housing element (12) in conjunction with an axial extension of the fixation element (13), in particular with an end section (13c) of the fixation element (13) that is electrically connected to the rest of the fixation element (13).

11. Connector device (1) according to any one of the preceding claims,
**characterized in that**
the fixation element (13) is configured to extend at least partly into or through the first conducting element (11).

12. Method for safely disconnecting one or more battery modules, in particular in a vehicle, comprising the method steps of
- Initial unscrewing of a screw, which screw serves, in a mounting position, as a fixation element (13) that fixes a first and a second connecting part (10, 20) of a connector device (1) at one another, until a first torque limit is reached, while a first housing element (12) of the first connecting part (10) and a second housing element (22) of the second connecting part (20) remain held attached to one another in a mating position;
- Continued unscrewing of the screw with overcoming the first torque limit until a second torque limit is reached, thereby automatically moving the screw in a parking position where it is held by the first housing element (12), which second torque limit is greater than the first torque limit, while the first housing element (12) of the first connecting part (10) and the second housing element (22) of the second connecting part (20) still remain held attached to one another in the mating position; and
- Further unscrewing of the screw with overcoming the second torque limit and automatically moving first and second housing element (12, 22) out of the mating position, thereby electrically disconnecting the first and the second connecting part (10, 20).

13. Method of the preceding claim,
**characterized in that**
the screw is electrically live at least during the initial unscrewing.
